# EUROPEAN PATENT APPLICATION

(11) **EP 4 675 797 A1**
(43) Date of publication of application: **07.01.2026**
(21) Application number: 24763466.0
(22) Date of filing: 30.01.2024
(51) Int. Cl.: H01M 50/244, H01M 10/613, H01M 10/625, H01M 10/627, H01M 10/643, H01M 10/6563, H01M 50/204, H01M 50/213, H01M 50/289, H01M 50/291, H01M 50/293

(54) **POWER SUPPLY DEVICE**

(30) Priority: 28.02.2023 JP 2023030512
(71) Applicant: Panasonic Energy Co., Ltd., Osaka 570-8511 (JP)
(72) Inventor: AOKI, Tomoaki, Osaka 571-0057 (JP); NAKAMURA, Ginga, Osaka 571-0057 (JP); HEGURI, Katsuyoshi, Osaka 571-0057 (JP); BABA, Takeshi, Osaka 571-0057 (JP)
(74) Representative: Eisenführ Speiser
(86) International application number: PCT/JP2024/002844
(87) International publication number: WO 2024/180981

(57) **Abstract**

The present disclosure reduces air leakage during air cooling. A power supply device 100 includes a rack 10 that holds one or more housings 20 while allowing the housings 20 insertable and removable into/from the rack 10, a latch mechanism 30 that holds each of the housings 20 so as to prevent the housing 20 from falling out of the rack 10, the latch mechanism 30 being provided in at least a part of a facing region where each of the housings 20 and an inner face of the rack 10 face each other, and one or more air cooling mechanisms 40 that forcibly blow cooling air into each of the housings 20. In the facing region, the latch mechanism 30 includes a projection 32 biased to protrude toward the inner face of the rack 10 from a surface of each of the housings 20, and a rack-side hole 14 opened at a position in the rack 10 facing the projection 32. Each of the housings 20 includes a housing-side hole 31 formed in a part of a surface facing the facing region to allow the projection 32 to protrude outward, and an elastic body 50 that elastically presses and seals a region including the housing-side hole 31 from an inner face side of the housing 20 in a state where the projection 32 protrudes from the housing-side hole 31.

## Description

### TECHNICAL FIELD

The present disclosure relates to a power supply device.

### BACKGROUND ART

In various fields including power storage applications, a power supply device containing a plurality of secondary battery cells stored in a housing has been used to drive an electrical device by a rechargeable secondary battery, such as a lithium-ion secondary battery (e.g., Patent Literature 1).

For such power supply devices, a configuration in which a plurality of housings are stored in a rack has been employed. This configuration requires a mechanism to hold the housings inserted in the rack. For example, a latch structure is employed in which a projection provided on the side face of the housing is engaged with a hole provided on the rack.

On the other hand, forced air cooling using a fan has been employed in power supply devices so as to cool members provided inside. In this configuration, in order to efficiently perform air cooling, it is necessary to prevent the air taken in by the fan from leaking out of the housing.

However, in a housing having a latch structure, it is necessary to form a hole in a part of the housing, which results in a problem of leakage of cooling air through the gap of the hole, thereby decreasing cooling efficiency.

### CITATION LIST

### PATENT LITERATURE

Patent Literature 1: WO2012/132135

### SUMMARY OF INVENTION

### TECHNICAL PROBLEM

One of the objects of the present disclosure is to provide a power supply device that achieves reduced air leakage during air cooling.

### SOLUTION TO PROBLEM

A power supply device according to one embodiment of the present disclosure includes one or more housings, each of which stores a plurality of secondary battery cells, a rack that holds the one or more housings while allowing the housings insertable and removable into/from the rack, a latch mechanism that holds each of the housings stored in the rack so as to prevent each of the housings from falling out of the rack, the latch mechanism being provided in at least a part of a facing region where each of the housings and an inner face of the rack face each other, and one or more air cooling mechanisms that forcibly blow cooling air into each of the housings. In the facing region, the latch mechanism includes a projection biased to protrude toward the inner face of the rack from a surface of each of the housings, and a rack-side hole opened at a position in the rack facing the projection. Each of the housings includes a housing-side hole formed in a part of a surface facing the facing region to allow the projection to protrude outward, and an elastic body that elastically presses and seals a region including the housing-side hole from an inner face side of the housing in a state where the projection protrudes from the housing-side hole.

### ADVANTAGEOUS EFFECTS OF INVENTION

In the power supply device according to one embodiment of the present disclosure, while each housing is held in the rack by the latch mechanism, the housing-side hole is sealed by the elastic body, thereby preventing cooling air taken in by the air cooling mechanism from leaking out of the housing through the housing-side hole. This prevents a decrease in cooling efficiency and ensures air cooling performance.

### BRIEF DESCRIPTION OF THE DRAWINGS

FIG. 1 is a perspective view of a power supply device according to Embodiment 1;
FIG. 2 is an exploded perspective view showing a state in which a housing is pulled out from the rack of FIG. 1;
FIG. 3 is an exploded perspective view of the housing of FIG. 2, with an enlarged view of a main portion;
FIG. 4 is an exploded perspective view of the housing of FIG. 3 viewed obliquely from below;
FIG. 5 is a schematic cross-sectional view of a power supply device according to a modification example;
FIG. 6 is an enlarged perspective view of the power supply device of FIG. 1;
FIG. 7 is a perspective view of the housing of FIG. 6 with the front wall removed;
FIG. 8 is a perspective view of the housing of FIG. 7 viewed obliquely from the rear;
FIG. 9 is a perspective view of a pressing plate;
FIG. 10 is a perspective view of the pressing plate of FIG. 9 viewed from the back side;
FIG. 11 is a schematic horizontal cross-sectional view showing the flow of cooling air in the power supply device of FIG. 1;
FIG. 12 is a perspective view of a power supply device according to a comparative example;
FIG. 13 is an exploded perspective view of the power supply device of FIG. 12;
FIG. 14 is an enlarged perspective view showing a state in which a housing is inserted into the rack of FIG. 13;
FIG. 15 is an enlarged perspective view showing a state in which the housing is partially pulled out from the rack of FIG. 14;
FIG. 16 is a perspective view of the housing of FIG. 15 with the front wall removed;
FIG. 17 is a schematic horizontal cross-sectional view showing the flow of cooling air in the power supply device of FIG. 12;
FIG. 18 is an enlarged perspective view showing a main part of FIG. 3;
FIG. 19 is a cross-sectional exploded perspective view taken along line XIX-XIX of FIG. 2;
FIG. 20 is a horizontal cross-sectional view showing a power supply device according to Embodiment 2; and
FIG. 21 is a vertical cross-sectional view taken along line XXI-XXI of FIG. 20.

### DESCRIPTION OF EMBODIMENTS

The embodiments of the present disclosure may be specified by the following configurations and features.

A power supply device according to another embodiment of the present disclosure is as recited in the preceding embodiment, wherein each of the housings includes a pressing plate having the projection on a first face, and the elastic body is configured to seal the housing-side hole by pressing a second face, which is the back side of the first face, of the pressing plate. With this configuration, the housing-side hole can be efficiently sealed by the elastic body.

A power supply device according to another embodiment of the present disclosure is as recited in any preceding embodiments, wherein the pressing plate includes an operation unit on one of edges of an extension direction that extends in one direction, and the operation unit is configured to enable releasing engagement of the latch mechanism by being displaced in a direction opposite to the direction in which the projection is biased.

A power supply device according to another embodiment of the present disclosure is as recited in any preceding embodiments, wherein the first face of the pressing plate on the other edge is secured to the inner face of each of the housings. With this configuration, the other edge of the pressing plate is secured like a cantilever, thereby allowing the projection to be biased to protrude from the housing.

A power supply device according to still another embodiment of the present disclosure is as recited in any preceding embodiments, wherein the pressing plate is configured from a metal plate, and the pressing plate includes a pair of the projections formed by bending both side faces that protrude outward, the pair of the projections being provided at a middle portion in the longitudinal direction. With this configuration, the pair of projections can be formed as the simple structure by bending a metal plate.

A power supply device according to still another embodiment of the present disclosure is as recited in any preceding embodiments, wherein each of the housings includes a fixed wall spaced apart from the inner face of the housing, and the elastic body is secured between the fixed wall and the inner face of the housing. This configuration allows the elastic body to not only close the housing-side hole but also function to bias the projection.

A power supply device according to still another embodiment of the present disclosure is as recited in any preceding embodiments, wherein each of the housings is configured as a box extending in one direction, one of end faces of each of the housings in the longitudinal direction serves as an insertion face through which the housing is inserted into the rack, the other end face of each of the housings serves as an exposed face to be exposed from the rack in a state where the housing is inserted in the rack, the latch mechanism is provided such that the operation unit protrudes from the exposed face to a side face side in the longitudinal direction of each of the housings and to an exposed face side of the rack, and the air cooling mechanism is provided on the exposed face side in each of the housings. With this configuration, it is possible to prevent air taken into the housing by the air cooling mechanism from leaking out from the side of the exposed face through the housing-side hole provided near the exposed face, thereby ensuring cooling performance.

Embodiments of the present disclosure are described below with reference to the drawings. However, the embodiments shown below are only examples to embody the technical concepts of the present disclosure, and the present disclosure is not limited to these embodiments. Further, this specification does not limit any member in the claims to the members described in these embodiments. In particular, unless otherwise specified, the dimensions, materials, shapes, relative positions, etc. of the components described in these embodiments are intended to be illustrative and not to limit the scope of the present disclosure. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present disclosure may be implemented such that a plurality of elements are formed from the same member, allowing a single member to serve as a plurality of elements, or that, conversely, the function of a single member is shared among a plurality of members.

The power supply device of the present disclosure can be used as a stationary power supply device, such as a backup power supply for servers, a power storage device for storing electricity generated by solar power or the like for households, business establishments, and factories, a power supply for peak cut during daytime, and the like. An indoor power supply device for power storage is described below as one embodiment of the present disclosure.

### [EMBODIMENT 1]

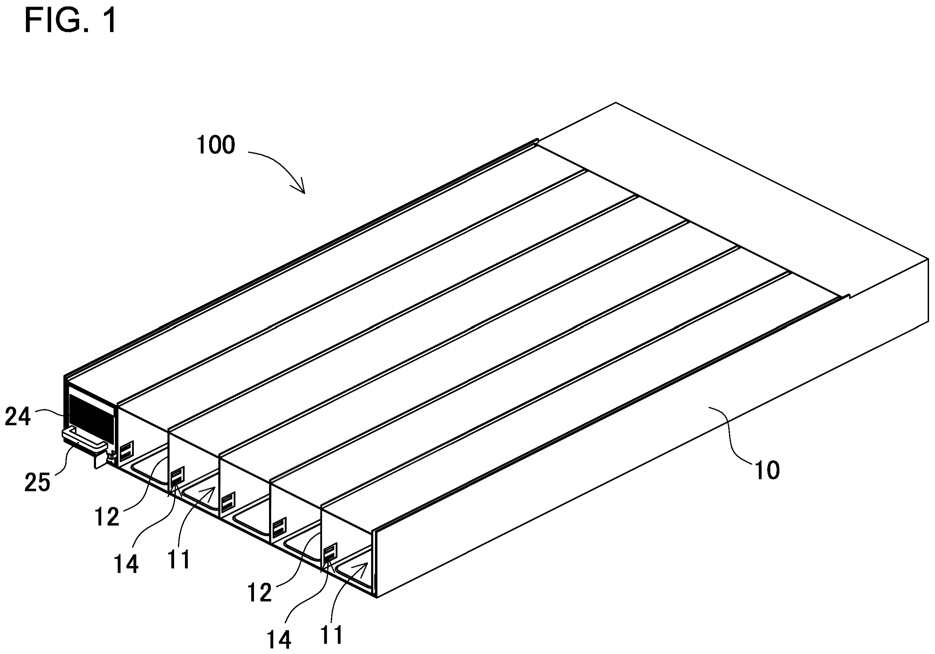

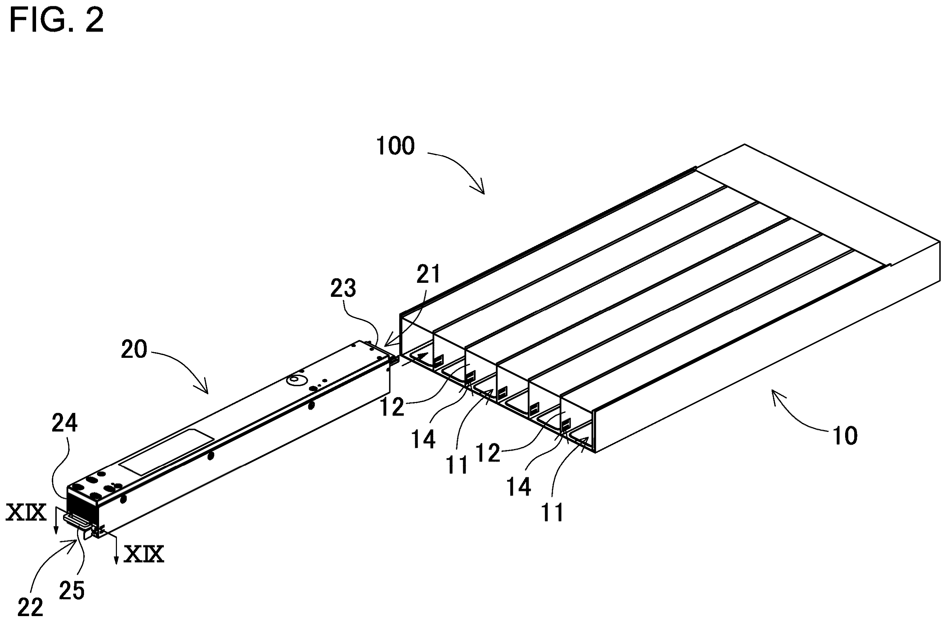

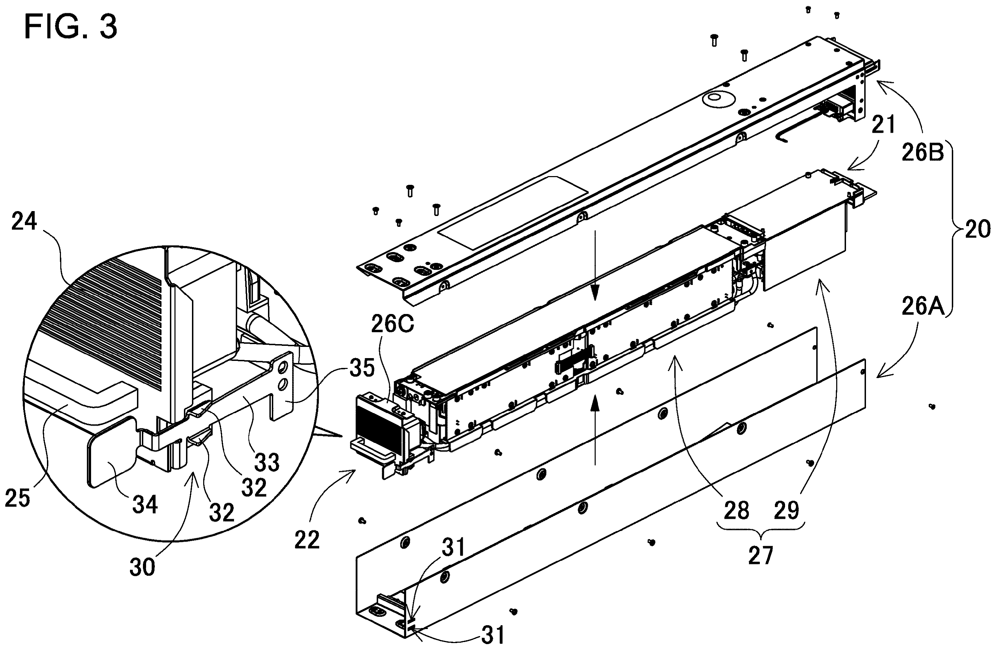

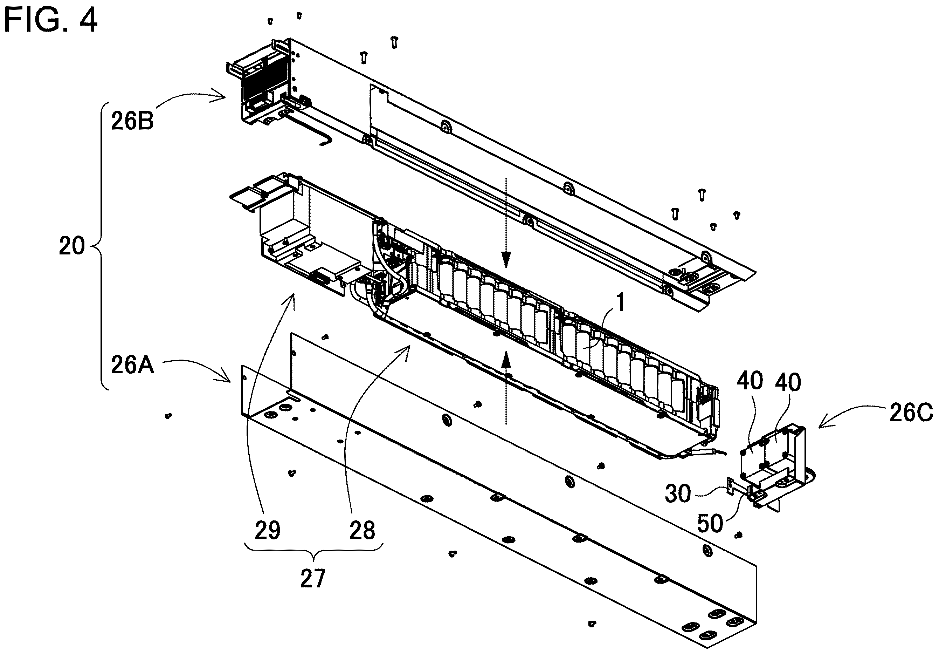

FIGs. 1 to 4 illustrate a power supply device 100 according to Embodiment 1 of the present disclosure. In these drawings, FIG. 1 is a perspective view of the power supply device 100 according to Embodiment 1, FIG. 2 is an exploded perspective view showing a state in which a housing 20 is pulled out from a rack 10 of FIG. 1, FIG. 3 is an exploded perspective view of the housing 20 of FIG. 2 with an enlarged view of the main portion, and FIG. 4 is an exploded perspective view of the housing 20 of FIG. 3 viewed obliquely from below. The power supply device 100 shown in these figures includes the rack 10 and the housing 20.

### (Rack 10)

The rack 10 is a member for storing one or more housings 20 while allowing them to be insertable and removable into/from the rack 10. The outer shape of the rack 10 is formed into a box. The rack 10 is provided with insertion/removal ports 11 through which the housings 20 can be inserted and removed. In the examples of FIGs. 1, 2, etc., the rack 10 has an outer shape as a flat plate, with the insertion/removal ports 11 horizontally arranged so that a plurality of housings 20 are disposed side by side. However, the configuration of the rack 10 is not limited to this example. The insertion/removal ports may also be stacked vertically so that the housings are arranged upright. It is also possible to arrange the housings in a grid pattern. Note that, it is not necessary to insert housings into all of the insertion/removal ports of the rack, and the number of housings to be inserted into the rack can be set according to the required output, capacity, or the like, of the power supply device. In the examples of FIG. 1, etc., for illustrative purposes, the housing 20 is inserted only into the insertion/removal port 11 at the left end of the rack 10.

The shape and the length of the opening end of the insertion/removal port 11 are designed according to the size of the housing 20 to be inserted or removed into/from the insertion/removal port 11. Further, the rack 10 is preferably made of a metal, such as a sheet metal with excellent heat dissipation properties.

### (Housing 20)

The housing 20 is inserted into and removed from the insertion/removal port 11 of the rack 10. The housing 20 has a rod-like outer shape extending in one direction to allow itself to be easily inserted or removal into/from the insertion/removal port 11. The rod-shaped housing 20 is preferably formed into a box. The housing 20 formed into a box has one of its end faces in the longitudinal direction serving as an insertion face 21 from which the housing is inserted into the rack 10. The other end face of the housing 20 serves as an exposed face 22, which is exposed from the rack 10 in a state where the housing is inserted in the rack 10. In the examples of FIG. 2, etc., the housing 20 is formed as a square prism with square end faces. However, the shape of the housing 20 is not limited to this example, and the housing 20 may have an end face of, for example, a rectangular or octagonal shape.

Each housing 20 stores a plurality of secondary battery cells 1 and constitutes a battery module. Each housing 20 outputs power of the plurality of secondary battery cells 1 connected in series or in parallel stored in the housing 20 to the rack 10. Therefore, the housing 20 includes a housing-side connector 23 to establish connection with the rack 10. Further, the rack 10 includes a rack-side connector to be connected to the housing-side connector 23.

FIGs. 3 and 4 show exploded perspective views of the housing 20. The housing 20 illustrated in these figures is formed into a box extending in the front-rear direction, and has a storage space for an internal assembly 27 inside thereof. The housing 20 here includes a first case 26A having a lateral U-shape when viewed from a cross section with the upper side opened, a second case 26B that closes the upper face of the first case 26A, and a third case 26C that closes the end face in the longitudinal direction of the housing 20. These first, second, and third cases 26A, 26B, and 26C are formed by cutting a metal plate and bending it into a predetermined shape. As the metal plate for forming the cases, aluminum or an aluminum alloy may be used. The first case 26A is formed by punching a single metal plate into a predetermined shape and bending it so that side-top plates in a vertical orientation are coupled to both sides of a bottom plate 11. The second case 26B is formed by punching a single metal plate into a predetermined shape and bending it so that fixed pieces in a vertical orientation are provided on both sides of a top plate, and a rear plate in a vertical orientation is coupled to the rear end. The third case 26C is formed by punching a single metal plate into a predetermined shape and bending it so that fixed pieces are coupled above and below and left and right of the exposed face 22.

The internal assembly 27 is housed within the internal storage space. The internal assembly 27 includes a battery block 28 including a plurality of secondary battery cells 1, and an output unit 29 including output terminals.

### (Battery Block 28)

The battery block 28 stores, for example, a large number of cylindrical secondary battery cells 1 arranged in parallel in a vertical orientation within a battery holder. The battery holder is preferably made of a material with excellent insulation and heat resistance properties. For example, the battery holder is made of a resin such as polycarbonate or ABS. The plurality of secondary battery cells 1 are connected in series and in parallel. The secondary battery cells 1 here are lithium-ion secondary batteries. A battery module 1 containing lithium-ion secondary batteries as the secondary battery cells 1 is capable of greater output relative to volume and weight. However, lithium polymer batteries or nickel-metal hydride batteries may also be used as the secondary battery cells in place of lithium-ion batteries. Therefore, in the present disclosure, the secondary battery cells are not limited to lithium-ion batteries, and any rechargeable batteries may be used as the secondary battery cells.

Further, in the battery block 28, a circuit board is disposed in a vertical orientation on the side face of the battery holder, and a lead plate 25 connected to the electrodes on the end faces of the secondary battery cells 1 is connected to the circuit board to detect intermediate potentials of the secondary battery cells 1 connected in series. Further, the circuit board includes an electronic circuit for detecting the states of the plurality of secondary battery cells 1. This electronic circuit includes a voltage detection circuit that detects the total potential of the battery assembly in which the secondary battery cells 1 are connected in series or in parallel, as well as intermediate voltages, and a circuit that detects the temperatures of the plurality of secondary battery cells 1.

### (Output Unit 29)

As shown in FIGs. 3 and 4, the output unit 29 includes a unit case, a circuit board, output terminals, and external connection terminals. The unit case holds the circuit board and the output terminals. The unit case is formed from an insulating member, such as a resin.

### (Circuit Board)

The circuit board is mounted with electronic circuits including a current detection circuit for detecting charging/discharging current, a circuit that detects and calculates the full charge and remaining capacity of the secondary battery cells 1 based on battery information such as voltage and temperature of the secondary battery cells 1 input from the circuit board of the battery block 28, a control circuit for controlling charging and discharging of the secondary battery cells 1, a protection circuit for monitoring whether the battery is operating normally, and the like. The circuit board is formed into a rectangular shape. In the examples of FIGs. 3 to 4, the circuit board is disposed in a vertical orientation on the side face of the unit case. The circuit board is preferably made of a resin such as glass epoxy.

### (Air Cooling Mechanism 40)

The power supply device 100 also includes one or more air cooling mechanisms 40 that forcibly blow cooling air into each housing 20. Suitable existing forced-air blowing mechanisms, such as axial fans, centrifugal fans, or blowers, can be used as the air cooling mechanism 40. In the examples of FIGs. 3 and 4, the air cooling mechanism 40 is provided on the side of the exposed face 22 of each housing. The forced-air blowing mechanism used for the air cooling mechanism 40 may take in outside air by drawing it in directly from the outside, or take in outside air by discharging internal air from the housing 20.

An air intake port 24 is formed in the exposed face 22 of the housing 20 to allow the air cooling mechanism 40 to take in outside air. The air intake port 24 may be formed in any desired pattern, such as a slit shape, grid pattern, mesh pattern, or dotted pattern. Further, a handle 25 is provided on the exposed face 22 to easily pull the housing 20 out from the rack 10.

### [Modification Example]

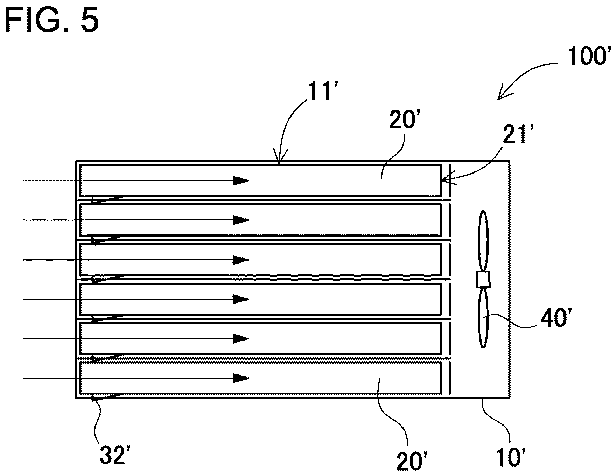

Note that, the air cooling mechanism 40 may be provided in each housing 20 as described above, and may also be provided in the rack. For example, as shown in a power supply device 100' according to a modification example shown in FIG. 5, a single air cooling mechanism 40' is provided on the side of an insertion face 21' of each housing 20', that is, on the back side of a rack 10'. This configuration provides such an advantage that, while each housing 20' is inserted into a corresponding insertion/removal port 11' and held by a projection 32', a common single air cooling mechanism 40' can be used to cool a plurality of housings 20'.

### (Latch Mechanism 30)

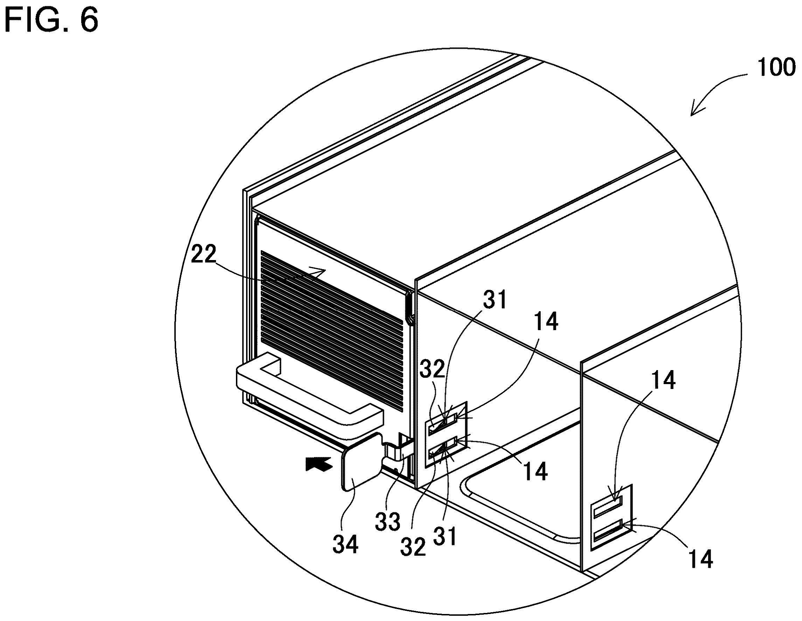

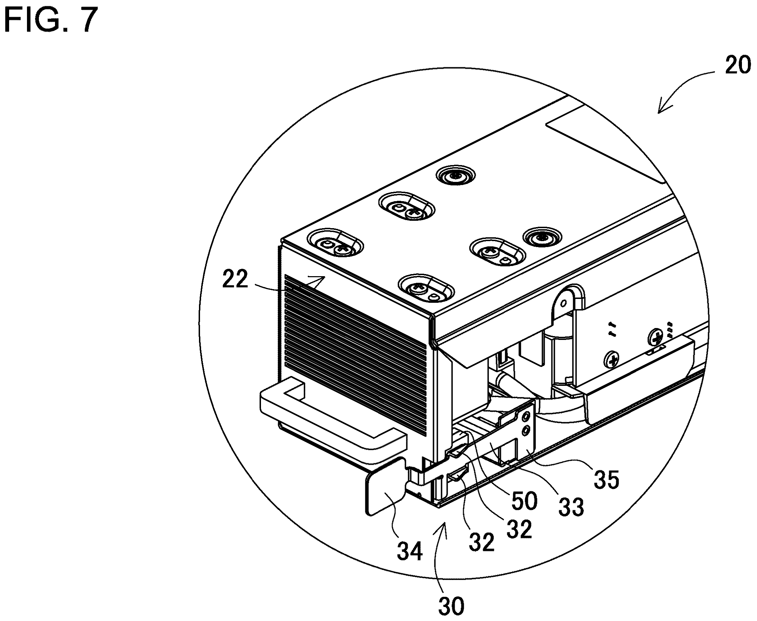

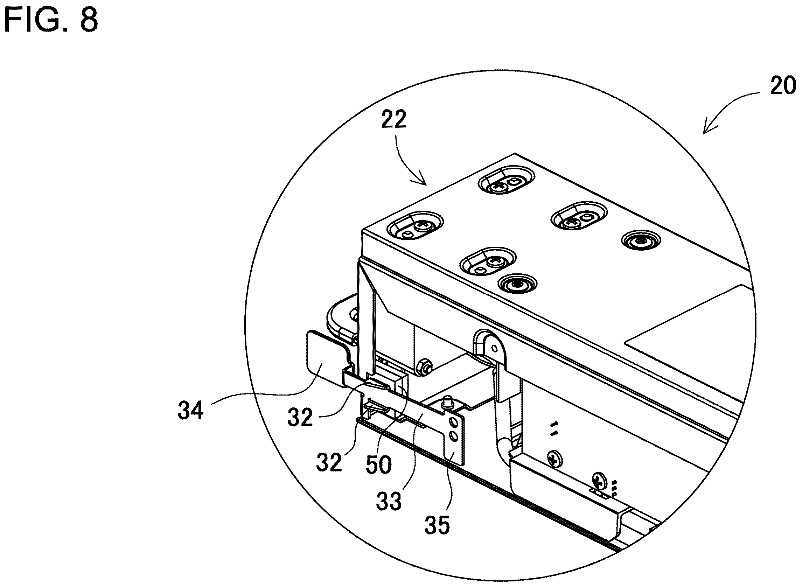

The power supply device 100 also includes a latch mechanism 30 that holds each housing 20 in the rack 10 so that the housing 20 does not fall out from the insertion/removal port 11 in a state where the housings 20 are inserted in the insertion/removal ports 11 of the rack 10. The latch mechanism 30 is provided at least in part of a facing region where each housing 20 and the inner face of the rack 10 face each other. FIGs. 6 to 8 illustrate an example of the latch mechanism 30.

### (Projection 32)

The latch mechanism 30 includes a projection 32 and a rack-side hole 14. The projection 32 protrudes from the surface of the housing 20 in the facing region. The projection 32 is also biased in a protruding direction toward the inner face of the rack 10. Further, the housing 20 has a housing-side hole 31 formed in a part of the surface facing the facing region to allow the projection 32 to protrude. The projection 32 is formed in a triangular shape with a gentle sloped side to facilitate engagement with the rack-side hole 14.

### (Pressing Plate 33)

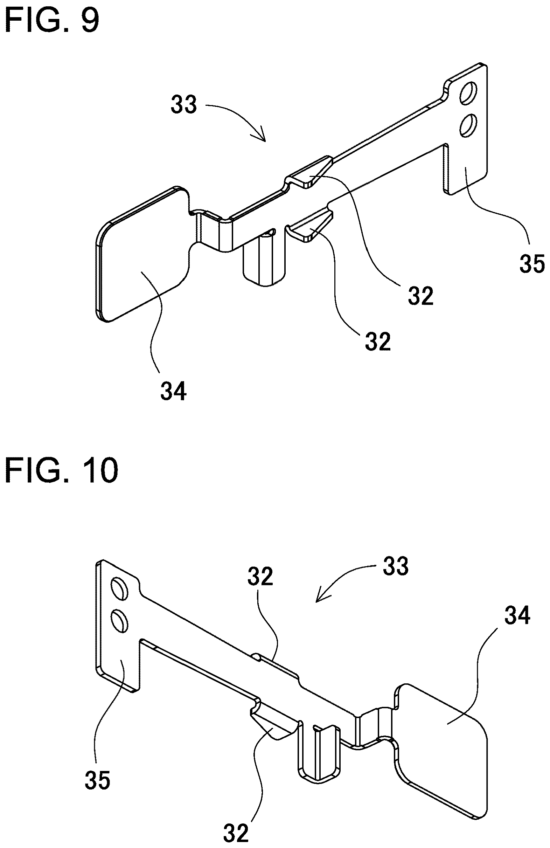

The housing 20 includes a pressing plate 33 having the projection 32 on its first face. The outer shape of the pressing plate 33 is shown in the perspective views of FIGs. 9 and 10. The pressing plate 33 as shown in the figures is made of a metal plate that is easily bent and processed. In the pressing plate 33, a pair of projections 32 are formed at the middle portion in the longitudinal direction by bending the both side faces that protrude outward. With this configuration, the pair of projections 32 can be formed as the simple structure by bending a metal plate.

One edge of the pressing plate 33, which extends in one direction, includes an operation unit 34. By operating the operation unit 34, the user can temporarily switch the latch mechanism 30 from an engaged state to a released state. Specifically, by displacing the operation unit 34 in a direction opposite to the direction in which the projection 32 is biased, for example, in FIG. 6, by pressing the operation unit 34 with a finger in the direction indicated by the arrow, the user can disengage the projection 32 from the housing-side hole 31, thereby releasing the engaged latch mechanism 30.

The pressing plate 33 also includes a securing unit 35 on the other edge. The first face of the securing unit 35 is secured to the inner face of the housing 20 by screwing, welding, or the like. With this configuration, the other edge of the pressing plate 33 is fixed like a cantilever, thereby allowing the projection 32 to be biased to protrude from the housing 20.

### (Rack-side Hole 14)

On the other hand, the rack-side hole 14 is opened at a position facing the projection 32 in the facing region of the rack 10. In the examples shown in FIGs. 1 and 2, rack-side holes 14 are formed in a rack inner wall 12, which defines the insertion/removal port 11 of the rack 10, and in the side wall at the front side. With this configuration, the latch mechanism 30 engages the projection 32 with the housing-side hole 31 in a state where the housing 20 is inserted in the insertion/removal port 11 of the rack 10, thereby establishing an engaged state.

### (Elastic Body 50)

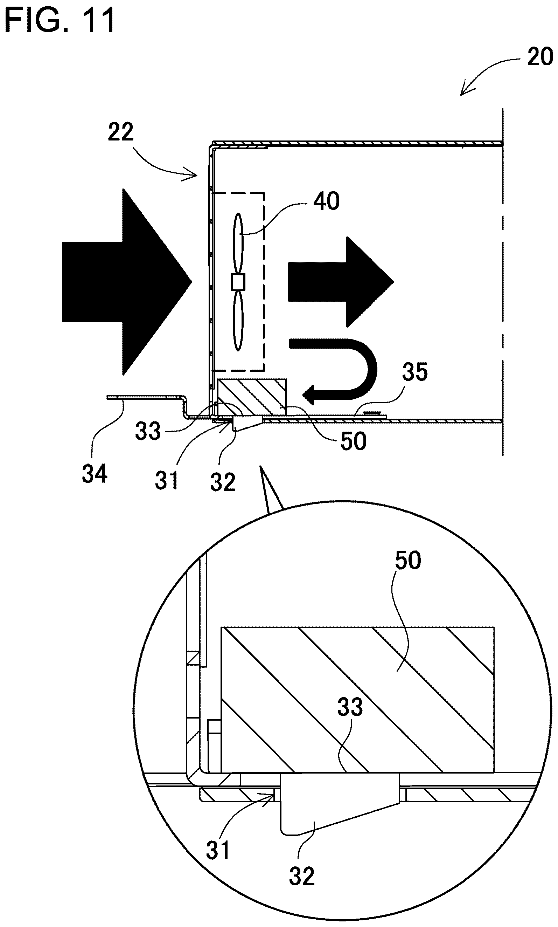

Further, the power supply device 100 includes an elastic body 50. The elastic body 50 elastically presses and seals the region including the housing-side hole 31 from the inner face side of the housing 20 in a state where the projection 32 protrudes from the housing-side hole 31. With this configuration, while each housing 20 is held in the rack 10 by the latch mechanism 30, the housing-side hole 31 is sealed by the elastic body 50, thereby preventing, as shown in FIG. 11, cooling air taken in by the air cooling mechanism 40 from leaking out of the housing 20 through the housing-side hole 31. This prevents a decrease in cooling efficiency and ensures air cooling performance.

### [Comparative Example]

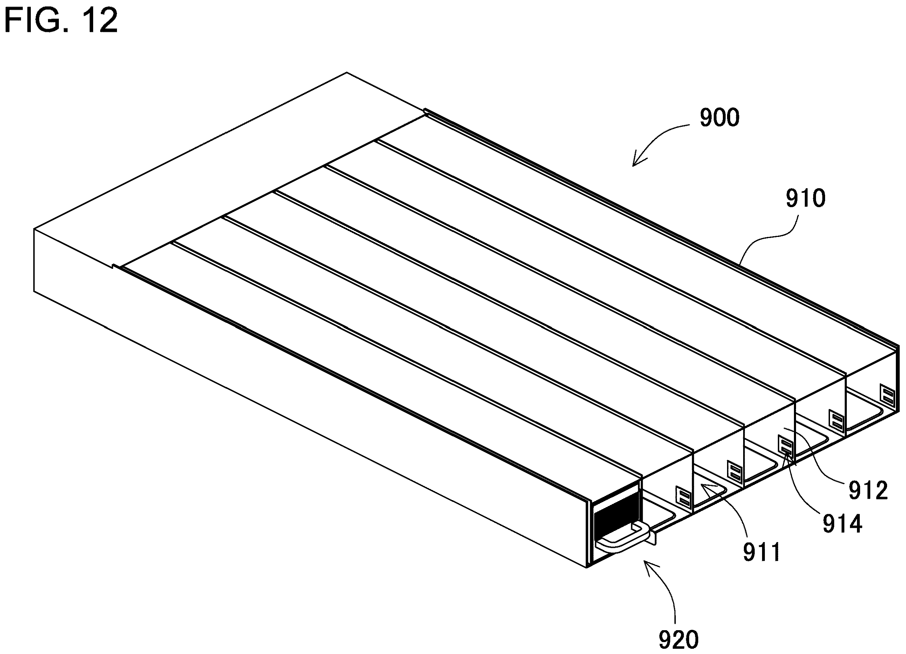

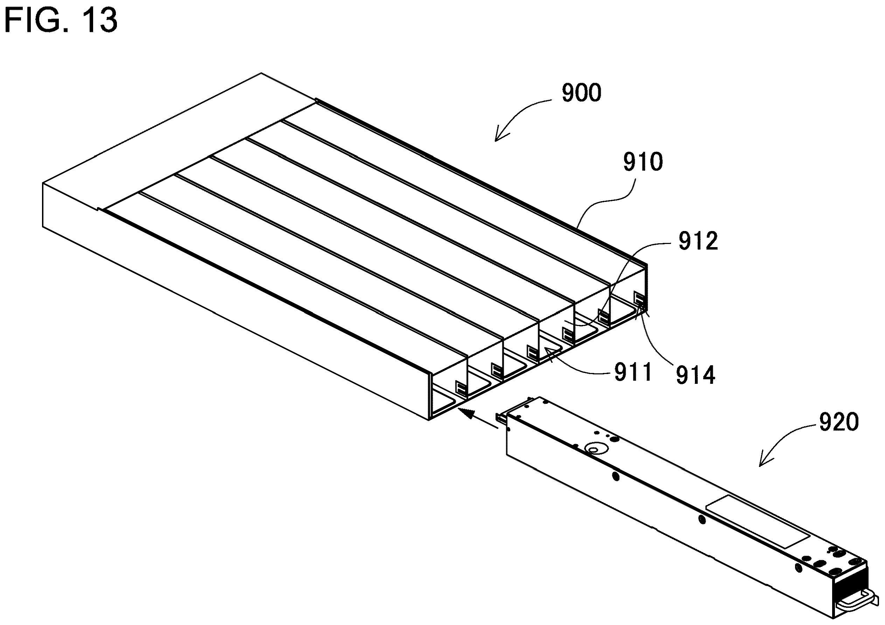

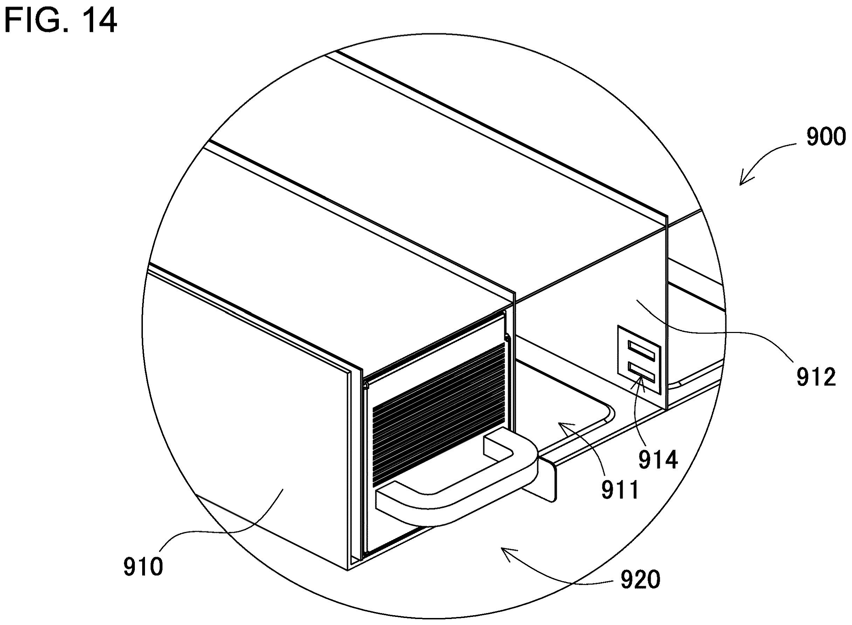

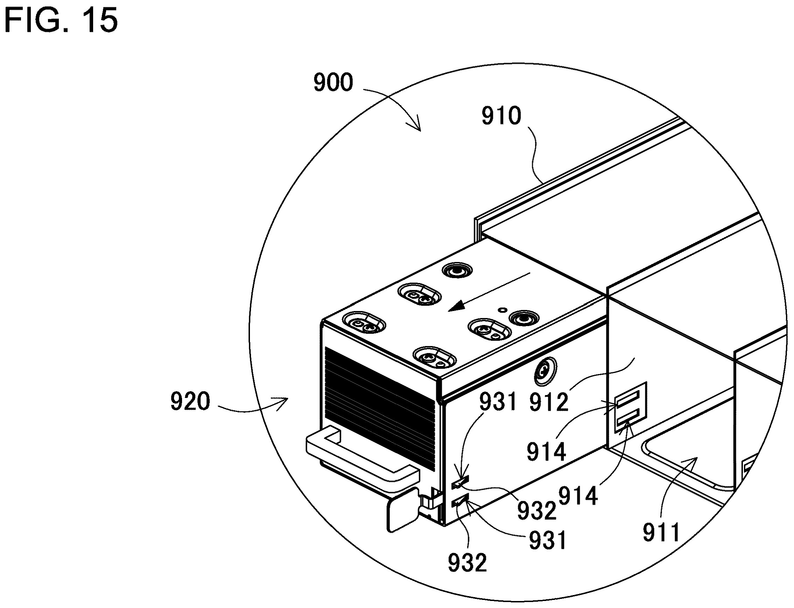

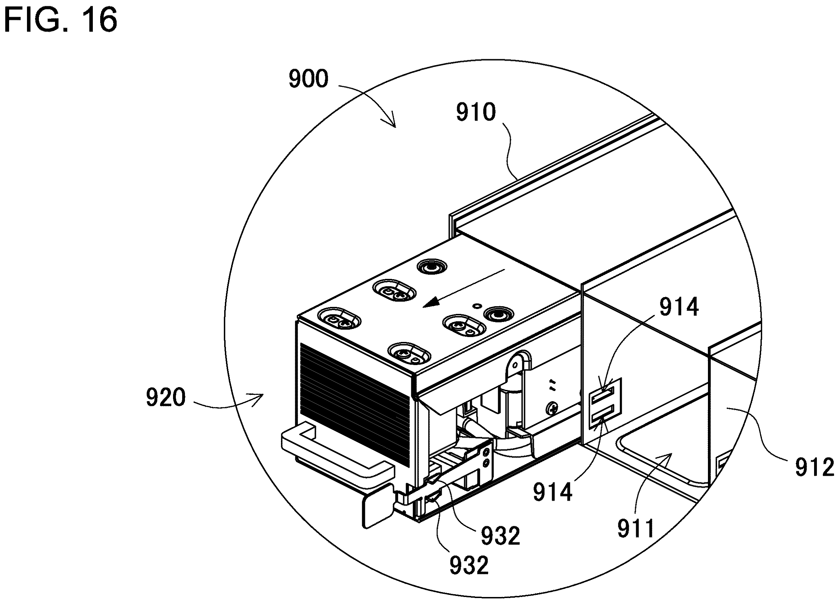

FIGs. 12 to 17 illustrate a power supply device 900 as a comparative example in which a housing 920 is held in a rack 910 by a latch mechanism 930. As shown in FIGs. 12 and 13, in the power supply device 900 that stores a plurality of housings 920 in the rack 910, the latch mechanism 930 for holding each housing 920 inserted in an insertion/removal port 911 of the rack 910 has a structure in which, on the side face of the housing 920, as illustrated in FIGs. 14, 15, and 16, projections 932 of a pressing plate 933, which protrude from housing-side holes 931, are engaged with rack-side holes 914 formed on a rack inner wall 912 of the rack 910 that defines the insertion/removal port 911.

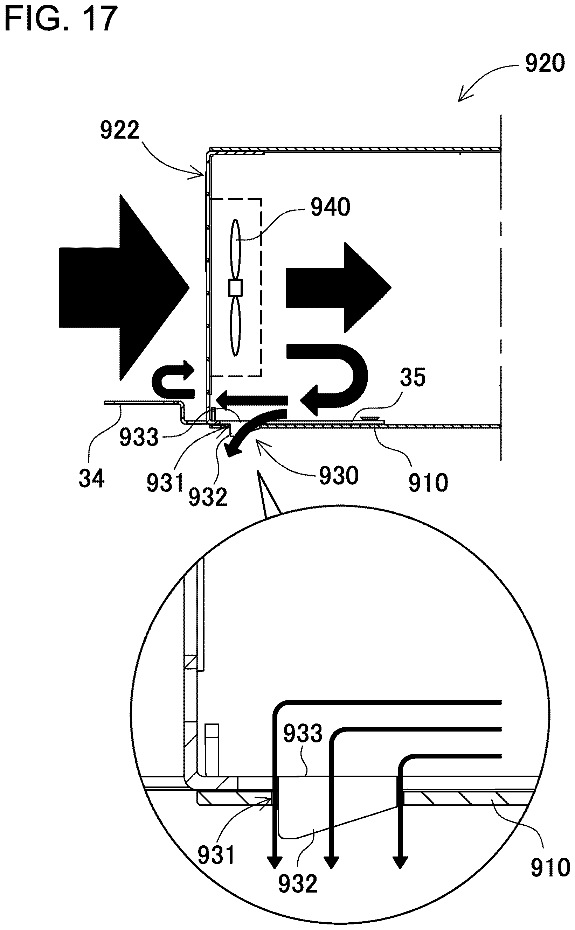

On the other hand, in the power supply device 900, forced air cooling using a fan 940 is used to cool members provided inside. As shown in FIG. 17, the fan 940 is provided on an exposed face 922 of the housing 920 and forcibly cools the inside of the housing by drawing therein outside air. In this configuration, in order to efficiently perform the air cooling, it is necessary to prevent the air drawn into the housing 920 by the fan 940 from leaking out of the housing 920.

However, in the housing 920 including the latch mechanism 930, it is necessary to form the housing-side holes 931 inside the housing 920, which results in a problem in that, as shown in FIG. 17, cooling air leaks through the gaps of the housing-side holes 931, thereby decreasing the cooling efficiency.

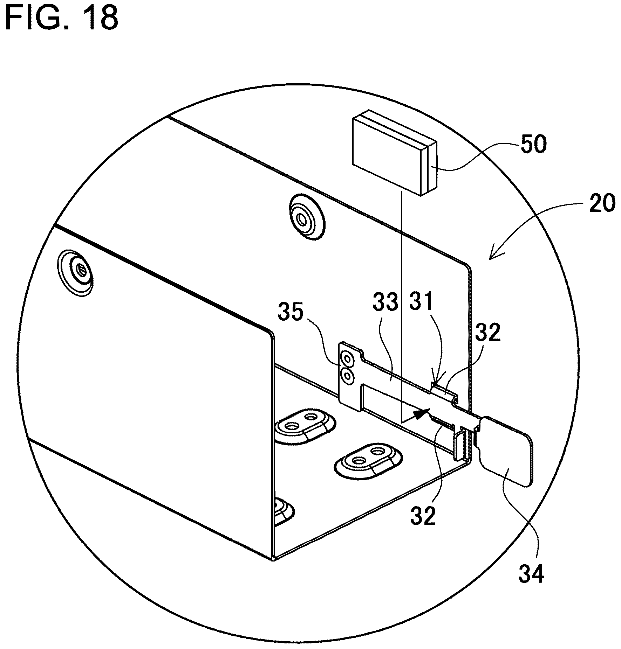

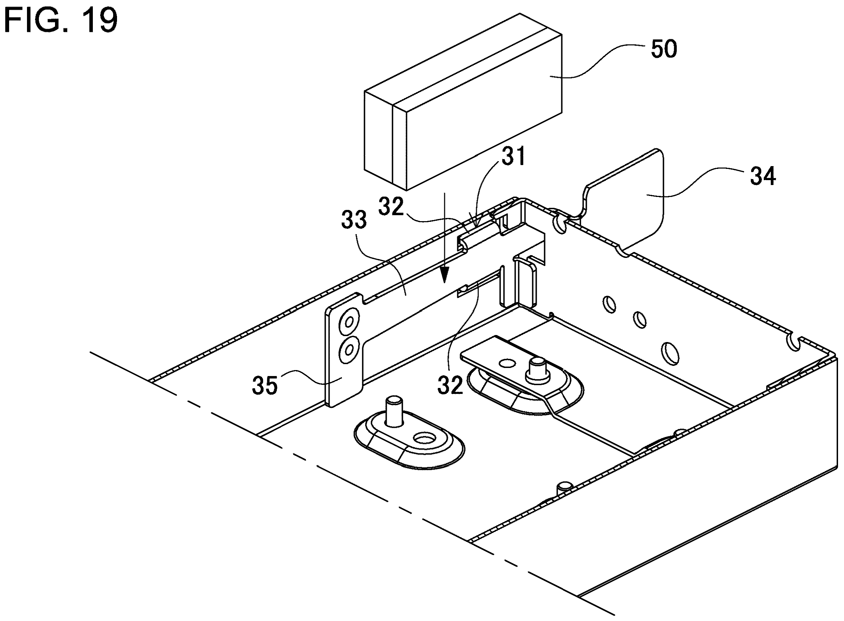

In contrast, the power supply device 100 according to the present embodiment further includes the elastic body 50, as shown in FIGs. 18 and 19. In a state where the projection 32 protrudes from the housing-side hole 31, the region including the housing-side hole 31 is elastically pressed and sealed by the elastic body 50 from the inner face side of the housing 20. As a result, while each housing 20 is held in the rack 10 by the latch mechanism 30, the housing-side hole 31 is sealed by the elastic body 50, thereby preventing, as shown in FIG. 11, cooling air taken in by the air cooling mechanism 40 from leaking out of the housing 20 through the housing-side hole 31. This prevents a decrease in cooling efficiency and ensures air cooling performance. Note that, in FIGs. 11 and 17, for explanatory purposes, only the housing is illustrated and the rack is omitted.

The elastic body 50 is configured to press a second face, which is the back side of the first face, of the pressing plate 33, thereby sealing the housing-side hole 31. Further, the elastic body 50 is formed into a size sufficient to seal the housing-side hole 31. In the examples of FIG. 6, etc., the housing 20 includes two housing-side holes 31, and a single elastic body 50 seals these two housing-side holes 31 simultaneously. With this configuration, the housing-side holes 31 can be efficiently sealed by the elastic body 50.

The elastic body 50 is secured to the back side of the pressing plate 33. For example, the elastic body 50 is bonded to the back side of the pressing plate 33 using a synthetic adhesive or the like. This ensures that the pressing plate 33 can move without being hindered. The elastic body 50 is elastically deformable and capable of filling the gap between the housing-side hole 31 and the pressing plate 33. Suitable materials for the elastic body 50 include resins such as sponge or rubber, and any flexible members. Foamed urethane is particularly suitable. In addition, the elastic body 50 may be formed by stacking a plurality of plates.

The latch mechanism 30 is provided on the longitudinal side surface of each housing 20 and on the side of the exposed face 22 of the rack 10, with the operation unit 34 projecting from the exposed face 22. Meanwhile, the air cooling mechanism 40 is provided on the side of the exposed face 22 within each housing 20. With this configuration, it is possible to ensure ease of operation for engaging and disengaging the housing 20 with/from the rack 10, while also preventing air taken into the housing by the air cooling mechanism 40 from leaking out from the side of the exposed face 22 through the housing-side hole 31 provided near the exposed face 22, thereby ensuring cooling performance.

### [Embodiment 2]

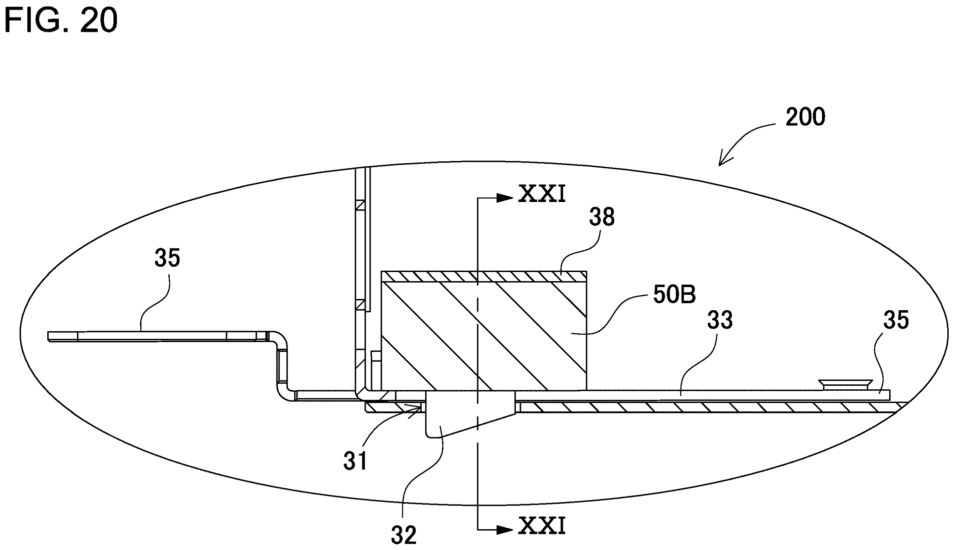

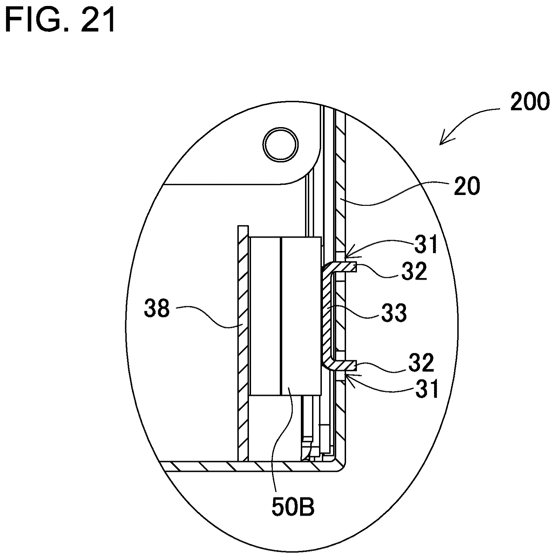

In the examples described above, the pressing plate 33 constituting the latch mechanism 30 including the elastic body 50 is formed into a plate spring and fixed to the inner face of the housing 20 like a cantilever. However, the present disclosure is not limited to this configuration of the latch mechanism. The latch mechanism may adopt any known structure as appropriate. The elastic body may also serve as a means for biasing the pressing plate. FIGs. 20 and 21 illustrate such an example as a power supply device 200 according to Embodiment 2. In the power supply device 200 shown in these figures, the same members as those of the power supply device 100 according to Embodiment 1 described above are given the same reference numbers and detailed descriptions are omitted as appropriate.

In the power supply device 200 shown in FIGs. 20 and 21, the housing 20 includes a fixed wall 38 spaced apart from the inner face, in this case, the side face wall, of the housing 20. An elastic body 50B is secured between the fixed wall 38 and the inner face of the housing 20. This configuration allows the elastic body 50B to not only close the housing-side hole 31 but also function to press the pressing plate 33 and bias the projection 32.

In the above examples, the power supply device is attached to the electrical device to be driven to supply power to the device. Additionally, when the remaining capacity of the power supply device is low or when the power supply device deteriorates over time, the power supply device can be replaced so that the electrical device remains usable. However, the power supply device of the present disclosure is not limited to a replaceable power supply device that typically stores secondary battery cells. The present disclosure is also applicable to embodiments in which secondary battery cells are stored within a housing of an electrical device. In the present disclosure, a power supply device simply refers to those in which, at least, secondary battery cells are stored in a housing such as a case. Therefore, a configuration with built-in secondary battery cells for driving an electrical device stored in a housing of the electrical device itself is also referred to as a power supply device. In other words, the present disclosure is not limited to replaceable power supply devices, and is also applicable to electrical devices with built-in secondary battery cells.

### INDUSTRIAL APPLICABILITY

The power supply device according to the present disclosure can be suitably used as a stationary power storage device, such as a power supply device for households, business establishments, and factories, a backup power supply for servers, and the like. The power supply device according to the present disclosure can also be used for a power source for driving an assist bicycle, or a power source for driving self-propelled robots for home delivery, electric carts for home delivery and golf courses, electric scooters, construction machinery, as well as vehicles such as hybrid vehicles and electric vehicles. In addition, the power supply device of the present disclosure can be suitably used, for example, as a power supply for portable electrical devices, such as radios, electric cleaners, and power tools. Further, the power supply device of the present disclosure can also be suitable for, in addition to power sources, cooling mechanisms for electrical devices with built-in heating elements.

### REFERENCE SIGNS LIST

100, 100', 200 ... power supply device
1 ... secondary battery cell
10, 10'... rack
11, 11' ... insertion/removal port
12 ... rack inner wall
14 ... rack-side hole
20 ... housing
21, 21' ... insertion face
22 ... exposed face
23 ... housing-side connector
24 ... air intake port
25 ... handle
26A ... first case
27 ... internal assembly
28 ... battery block
29 ... output unit
30 ... latch mechanism
31 ... housing-side hole
32, 32' ... projection
33 ... pressing plate
34 ... operation unit
35 ... securing unit
38 ... fixed wall
40 ... air cooling mechanism
50, 50B ... elastic body
900 ... power supply device
910 ... rack
911 ... insertion/removal port
912 ... rack inner wall
914 ... rack-side hole
920 ... housing
922 ... exposed face
930 ... latch mechanism
931 ... housing-side hole
932 ... projection
933 ... pressing plate
940 ... fan

## Claims

1. A power supply device comprising:
one or more housings, each of which stores a plurality of secondary battery cells;
a rack that holds the one or more housings while allowing the housings insertable and removable into/from the rack;
a latch mechanism that holds each of the housings stored in the rack so as to prevent each of the housings from falling out of the rack, the latch mechanism being provided in at least a part of a facing region where each of the housings and an inner face of the rack face each other; and
one or more air cooling mechanisms that forcibly blow cooling air into each of the housings,
wherein
in the facing region, the latch mechanism comprises:
a projection biased to protrude toward the inner face of the rack from a surface of the housing, and
a rack-side hole opened at a position in the rack facing the projection,
the housing comprises:
a housing-side hole formed in a part of a surface facing the facing region to allow the projection to protrude outward, and
an elastic body that elastically presses and seals a region including the housing-side hole from an inner face side of the housing in a state where the projection protrudes from the housing-side hole.

2. The power supply device as recited in claim 1, wherein
the housing comprises a pressing plate having the projection on a first face, and
the elastic body is configured to seal the housing-side hole by pressing a second face, which is the back side of the first face, of the pressing plate.

3. The power supply device as recited in claim 2, wherein
the pressing plate comprises an operation unit on one of edges of an extension direction that extends in one direction, and
the operation unit is configured to enable releasing engagement of the latch mechanism by being displaced in a direction opposite to the direction in which the projection is biased.

4. The power supply device as recited in claim 3, wherein
the first face of the pressing plate on the other edge is secured to the inner face of the housing.

5. The power supply device as recited in claim 4, wherein
the pressing plate is configured from a metal plate, and
the pressing plate comprises a pair of the projections formed by bending both side faces that protrude outward, the pair of the projections being provided at a middle portion in the longitudinal direction.

6. The power supply device as recited in claim 3, wherein
the housing comprises a fixed wall spaced apart from the inner face of the housing, and
the elastic body is secured between the fixed wall and the inner face of the housing.

7. The power supply device as recited in any one of claims 3 to 6, wherein
each of the housings is configured as a box extending in one direction,
one of end faces of each of the housings in the longitudinal direction serves as an insertion face through which the housing is inserted into the rack,
the other end face of each of the housings serves as an exposed face to be exposed from the rack in a state where the housing is inserted in the rack,
the latch mechanism is provided such that the operation unit protrudes from the exposed face to a side face side in the longitudinal direction of each of the housings and to an exposed face side of the rack, and
the air cooling mechanism is provided on the exposed face side in each of the housings.
